# EUROPEAN PATENT APPLICATION

(11) **EP 1 048 970 A1**
(43) Date of publication of application: **02.11.2000**
(21) Application number: 00104057.5
(22) Date of filing: 28.02.2000
(51) Int. Cl.: G02C 1/08

(54) **Improved spectacles made at least partially of metal wire**

(30) Priority: 06.04.1999 IT PN990013 U
(71) Applicant: Oros S.r.l., 35012 Camposampiero, Padova (IT)
(72) Inventor: Bolzonello, Aldo, 32030 Quero (Belluno) (IT)
(74) Representative: Giugni, Valter

(57) **Abstract**

Spectacles in which for each lens-holding frame use is made of a rim-closing arrangement formed by two small overlapping perforated plates (12, 13) with a clamping screw (5) whose shank (6) is partially adapted to engage the threading of the hole (18) of a small plate (14). The invention makes use of elastically deformable means that are adapted to prevent said small plates from separating from each other after the corresponding lens has been mounted. The elastically deformable means may consist of a spring (9) that surrounds the unthreaded portion of the shank (6) of the screw (5) and is accommodated in a portion (16) with a larger diameter of the hole of one of said small plates (13).

A similar system is preferably used also in the articulated joint provided between the inner end portion of the coupling holders and the respective temple bars.

USE: Spectacles in which the lens-holding frames and preferably also the temple bars are made out of metal wire.

## Description

The present invention refers to spectacles in which the lens-holding frames and preferably also the temple bars are made of metal wire.

Spectacles are known from the disclosure in US-A-4 674 852, in which each frame has, in a point which is the most distant from the center-line plane thereof, an interruption that is closed after the related lens is mounted. To this purpose, in correspondence of such an interruption, from the end portions of the frame there is protruding, outwardly with respect to the spectacles, a respective small perforated plate which, jointly with an intermediate coupling member that is also provided with a hole or aperture, forms a so-called rim closing or coupling arrangement. The threaded vertical bore or hole of a small plate is engaged by the shank of a first screw whose head is accommodated in an enlarged portion of the bore in the intermediate coupling member. Said first screw is furthermore crossed all along by a threaded groove that is engaged by the shank of a second screw, which is of course smaller than the first screw. Owing to it being screwed into the first screw, the head of the second screw abuts against the edge of the flat hole of the second small plate. Owing to their complex, bulky and relatively heavy construction, spectacles of this kind cannot however be manufactured out of metal wire, as in the case of the spectacles according to the present invention.

Spectacles are also known from the disclosure in US-A-4 466 713 which have their lens-holding frames made of metal wire, in which the rim-closing or coupling arrangement consists of two protruding perforated small plates, which are also made of metal, are attached by braising to the end portions of the rims and define said interruption. The rim coupling arrangement is tightened and secured by the use of screws whose shank engages the threaded hole of a small plate, while the head thereof is accommodated in the flat hole of the other small plate.

Spectacles are in this way obtained of a kind which is generally known to find large acceptance among consumers, but is also very prone to the risk of the lenses falling away owing to the screws of the rim coupling arrangement being unavoidably subject to loosening. In practical use, such a risk persists even in the case that a nut is used to lock the free end of the shank of the screw.

Practical remedies aimed at doing away with such a risk call for the screws used in the rim coupling arrangement to be locked by means of, for instance, the flattening out and clinching of the free end of the threaded shank and the local application of droplets of an anaerobic adhesive. If on the one hand such remedies are very effective in preventing the screws from getting loosened, on the other hand they are plainly irreversible, so that any subsequent action to be taken on the spectacles themselves, in view for instance of replacing a lens, are practically unfeasible, if not impossible.

In spectacles in which also the temple bars are manufactured of metal wire, a similar loosening problem also involves the screws that are used in the hinges connecting each such temple bar to the respective coupling holder.

It would therefore be desirable, and it is actually a main purpose of the present invention, to provide spectacles that are manufactured at least partially with metal wire, in which a loosening of the screws used to fasten the various parts to each other is made fully impracticable by the use of means that are simple, inexpensive to implement, and that do not create any problem or hindrance in view of possible actions to be carried out subsequently by an optician, eg. for replacing a lens or the like.

According to the present invention, this aim is reached in spectacles made at least partially of metal wire and having the characteristics as recited in the appended claims.

The features and advantages of the present invention will anyway be more readily and clearly understood from the description that is given below by way of non-limiting example of some embodiments thereof with reference to the accompanying drawings, in which
- Figure 1 is a partially three-dimensional view of a pair of spectacles;
- Figure 2 is a cross-sectional view according to the vertical line II-II of Figure 1 of a first embodiment of the present invention;
- Figure 3 is a cross-sectional view of the same spectacles according to the vertical line III-III of Figure 1;
- Figure 4 is a view similar to Figure 2, however referring to a second embodiment of the present invention;
- Figure 5 is a view similar to Figures 2 and 4, however referring to a third embodiment of the present invention.

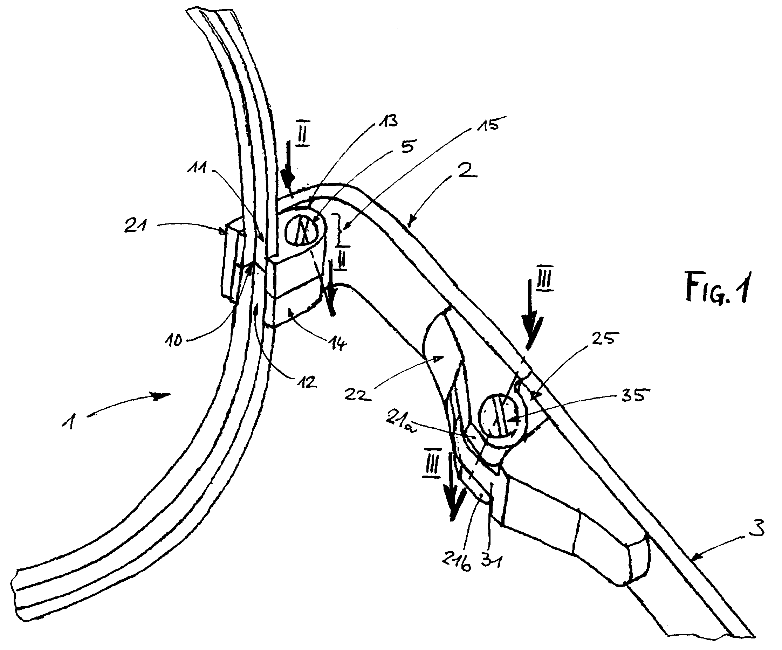

As illustrated in Figure 1 (the purpose of which is to solely show the position of the parts which the present invention more particularly refers to), a pair of spectacles comprise a pair of lens-holding frames or rims, such as the right-hand frame or rim generally indicated at 1, a pair of coupling holders such as the one generally indicated at 2 and two temple bars such as the one indicated at 3. The lens-holding rims 1 and preferably also the temple bars 3 are in a per sè known manner manufactured out of metal wire, so that the spectacles themselves turn out to find large acceptance among consumers, as this has already been stated earlier in this description.

The rim 1 has an interruption line 10 in correspondence of which, at the end portions 11 and 12, there are provided a first perforated small plate 13 and a second perforated small plate 14, respectively, so as to form the rim coupling 15 of the right-hand lens. The outer end portion 20 of the coupling holder 2 is connected by braising to the outer surface of one of said small plates, whereas the inner end portion 21 of the same coupling holder 2 is in turn connected to the temple bar 3 by means of an articulated joint 25, as this is explained in greater detail further on.

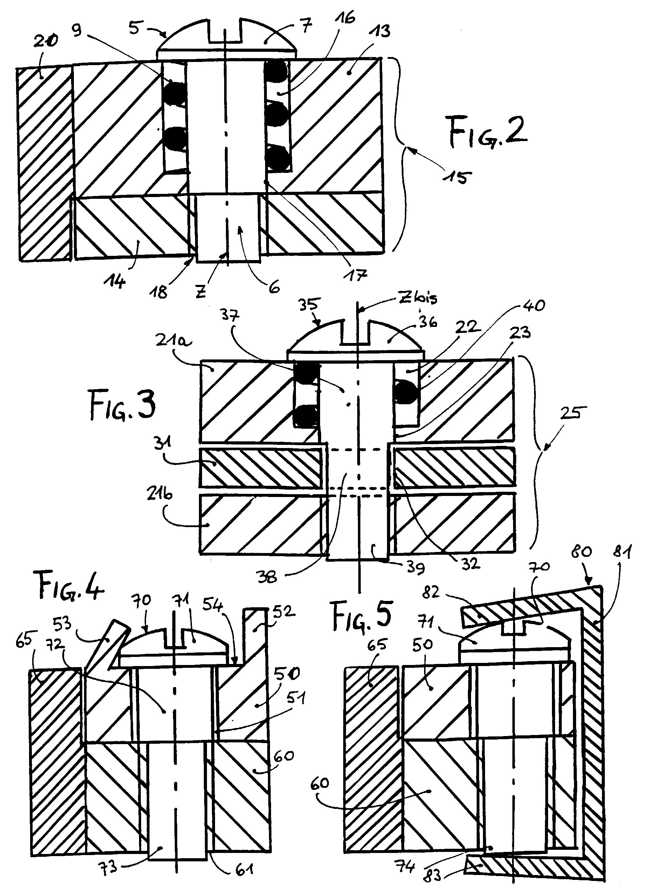

In connection with the first embodiment of the spectacles according to the present invention, which is illustrated in detail in Figures 2 and 3, it should be noticed that:
- the first small plate 13 of the rim coupling arrangement 15 of the lens-holding rim 1 is provided with a hole extending through the whole thickness thereof along a vertical axis Z and comprises a first portion 16, which is longer and has a larger diameter (D1), and a second portion 17, which is shorter and has a smaller diameter (D2). To the outer surface of the first small plate 13 there is connected by braising the outer end portion 20 of the coupling holder 2 (see Figure 2);
- the second small plate 14 of the rim coupling arrangement 15 is in turn provided with a threaded through-hole 18 having a nominal diameter (DN) that is equal to the diameter (D2) of the second portion 17 of the through-hole of said first small plate 13;
- after the lens (which is not shown for reasons of greater simplicity) has been then mounted in the rim 1, the rim coupling arrangement is clamped and secured by means of a screw 5 whose threaded shank 6 engages the threaded hole 18 of the second small plate 14, and whose head 7, owing to its having a diameter (DT) which is larger than the diameter (D1) of the first portion 16 of the through-hole of the first small plate 13, abuts against the mouth or opening of the same first hole portion 16. According to the present invention, even in the case of the screw 5 becoming loosened (ie. the shank 6 slipping or coming partially out of the threaded hole 18), the small plates 13 and 14 will anyway stay constantly in contact with each other thanks to the pressing action exerted by a spring 9. As this is again shown in Figure 2, the spring 9 surrounds the upper portion of the shank 6 of the screw 5, while remaining housed inside said first portion 16 of the through-hole of said first small plate 13 owing to the contrasting action exerted by the head 7 itself;
- as shown in Figure 3, the inner end portion 21 of the coupling holder 2 is formed by two horizontal parallel protrusions 21a, 21b, the first one 21a of which has a hole that extends through its whole thickness along a vertical axis Zbis and comprises a first portion 22, which is longer and has a larger diameter (D4), and a second portion 23, which is shorter and has a smaller diameter (D5).

In turn, the front end portion 31 of the temple bar 3 is provided with a through-hole 32 so as to have the necessary play or clearance around the central portion 38 of the pin 35 for providing the articulated joint 25. The pin 35 further comprises: a head 36 which, owing to it having a diameter (DH) that is larger than the diameter (D4) of the first portion 22 of the through-hole of the first protrusion 21a of the coupling holder 2, abuts against the mouth of the same first through-hole portion 22; a first plane portion 37 extending below the head 36 to a length (L) which is greater than or equal to the thickness (S) of the front end portion 31of the temple bar 3; and a final threaded portion 39 provided to engage the threaded through-hole 27 of the second protrusion 21b of the same inner end portion 21 of the coupling holder 2. The threaded hole 27 has a nominal diameter (DH) equal to the diameter (D5) of the second portion 23. In order to prevent the temple bar 3 from coming off the coupling holder 2 in the case that the threaded portion 39 of the pin 35 happens to partially slip or come out of the threaded hole 27 of the second protrusion 21b of the coupling holder 2, according to the present invention use is made of a spring 40 that surrounds the first portion 37 of the pin 35, while remaining accommodated inside the first portion 22 of the through-hole of the first protrusion 21a of the same coupling holder 2 owing to the contrasting action exerted by the head 36.

A second embodiment of the rim coupling arrangement, which is illustrated in Figure 4, introduces following variants with respect to the first embodiment that has just been described above:
- the first small plate 50 is crossed throughout by a flat through-hole 51 and is provided with at least two elastically deformable tabs 52 and 53 which protrude from the upper surface 54 thereof;
- the second small plate 60, to the outer surface of which the outer end portion 66 of the coupling holder is connected by braising, has a threaded through-hole 61 that has a nominal diameter which is smaller than the diameter of the hole 51 of the first small plate 50;
- the clamping screw 70 comprises a head 71, which has a diameter that is greater than the diameter of the hole 51 of the first small plate 50 and is adapted to abut against the edge of the same hole situated on the surface 54, when the final threaded portion 73 of its shank 72 engages the hole 61 of the second small plate 60.

According to the present invention, after the screw 70 has been so inserted, the tabs provided on top of the first small plate 50 of the rim coupling arrangement are bent over the head, so as illustrated in Figure 4 in the case of the tab 53. This is effective in substantially preventing the screw 70 from becoming loosened and, therefore, the two small plates 50 and 60 from separating from each other. In this connection it should anyway be duly noticed that the thickness of the tabs 52 and 53 is actually very small (in the order of just a few tenths of millimetre) and that the material of which the small plate 50 is made has a good elasticity. As a result, should a maintenance or service action be taken on the spectacles, eg. to replace a lens or the like, the screw 70 can be quite easily removed from the rim coupling arrangement by pulling it upwards against the elastic resistance of the tabs 53, 54.

Finally, a third embodiment of the present invention, which is illustrated in Figure 5, differs from the above described one owing only to the fact that, in view of preventing the screw 70 from loosening use is made of a clip or similar device 80 which is made of an elastically deformable material, eg. harmonic or music steel, and is substantially in the shape of a "C" with two elastically deformable tabs 82 and 83 connected through a core 81. The clip 80 is so sized as to cause the head 71 and the opposite end portion 74 of the screw 70 to eventually becoming clamped between said tabs 82 and 83, respectively, so that the screw 70 cannot come off accidentally from the rim coupling arrangement.

The possibility is of course always given for the clip 80 to be removed in view of removing the screw 70 in the case of a repair or replacement work to be carried out on the spectacles.

It should further be noticed that, the necessary changes being made, systems similar to those illustrated in Figures 4 and 5 for locking the clamping screw of a rim coupling arrangement may be advantageously used in the articulated joints provided between the coupling holders and the temple bars, instead of the system shown in Figure 3.

Further variants and embodiments of the present invention, offering the same advantages, may of course be developed by those skilled in the art based on the teachings of the present invention.

In all cases, the advantages of the present invention lie in the elimination, through the use of not only effective, but also simple and relatively inexpensive means, of any risk for a lens to fall off accidentally, owing to the small plates of the corresponding rim coupling arrangement becoming separated from each other, and the temple bars to accidentally come off the respective coupling holders. Said means are furthermore such as to avoid affecting or impairing to any extent any action that might be subsequently taken on the spectacles themselves, for instance in view of replacing a lens.

## Claims

1. Spectacles in which the lens-holding frames (1) and, preferably, also the temple bars (3) are made of metal wire, and in which for the rim of each lens-holding frame use is made of a rim coupling arrangement (15) that comprises a first small plate (13; 50) and a second small plate (14; 60) having through-holes engaged by a screw (5; 70) whose shank (6; 73) is partially adapted to engage the threading of one (18; 61) of said holes, **characterized in that** they further comprise elastically deformable means (9; 52, 53; 80) that are adapted to prevent said small plates (13, 14; 50, 60) from separating from each other after the corresponding lens has been mounted.

2. Spectacles according to claim 1, **characterized in that** said elastically deformable means comprise at least a spring (9) that surrounds the unthreaded portion of the shank (6), while remaining housed in a portion (16) with a larger diameter of the hole of one of said small plates (13) of the rim coupling arrangement.

3. Spectacles according to claim 2, **characterized in that** said spring (9) is forced by the head (7) of the screw (5) into remaining inside said hole portion.(16) of the small plate (13).

4. Spectacles according to claim 1, **characterized in that** said elastically deformable means comprise, for each rim coupling arrangement, tabs (52, 53) that are integrally provided on the surface (54) of a small plate (50) that does not enter into contact with the other small plate (60) of the rim coupling arrangement, said tabs (52, 53) being capable of being bent over the head (71) of the screw (70) that protrudes from said surface (54) of the same small plate (50).

5. Spectacles according to claim 1, **characterized in that** said elastically deformable means comprise, for each rim coupling arrangement, a clip (80) having substantially the shape of a "C" whose terminal tabs (82, 83) are adapted to remain clamped on to the head (71) and the opposite end portion (74) of the screw (70) of the rim coupling arrangement, respectively.

6. Spectacles according to any of the preceding claims, in which to the outer surface of one (13; 60) of the small plates of a rim coupling arrangement there is secured the outer end portion (20; 65) of the corresponding coupling holder (2), and in which the inner end portion (21a, 21b) of the same coupling holder is joined to the temple bar (3) by means of an articulated joint (25), **characterized in** that they also comprise elastically deformable means (40) that are arranged so as to be in contrast with at least a portion (36) of the pin (35) of the articulated joint so as to prevent the temple bar (3) from separating from the respective coupling holder (2).
